# EUROPEAN PATENT APPLICATION

(11) **EP 3 623 971 A1**
(43) Date of publication of application: **18.03.2020**
(21) Application number: 18799115.3
(22) Date of filing: 13.04.2018
(51) Int. Cl.: G06F 21/12, B60R 16/02, G06F 13/00, G06F 21/55

(54) **INFORMATION PROCESSING DEVICE AND ANOMALY RESPONSE METHOD**

(30) Priority: 12.05.2017 JP 2017095882
(71) Applicant: Hitachi Automotive Systems, Ltd., Hitachinaka-shi Ibaraki 312-8503 (JP)
(72) Inventor: MORITA, Nobuyoshi, Tokyo 100-8280 (JP); IDEGUCHI, Kota, Tokyo 100-8280 (JP); KAYASHIMA, Makoto, Tokyo 100-8280 (JP)
(74) Representative: Mewburn Ellis LLP
(86) International application number: PCT/JP2018/015512
(87) International publication number: WO 2018/207551

(57) **Abstract**

An information processing device 10 included in an in-vehicle system of a vehicle includes an information acquisition unit 120 that collects abnormality information 171 relevant to an abnormality that has occurred in the vehicle, a determination unit 130 that identifies a source of generation of the abnormality that has occurred on the basis of the abnormality information 171, and a spread prevention processing unit 150 that executes a spread prevention process in which a predetermined function of a target identified by the determination unit 130 is restricted.

## Description

### Technical Field

The present invention relates to an information processing device and an abnormality handling method, and can be suitably applied to an information processing device that detects an abnormality from another information processing device mounted in or connected to an in-vehicle system, and an abnormality handling method performed by the information processing device.

### Background Art

In recent years, an in-vehicle system of an automobile is providing users with various services while being connected to a center system (hereinafter, referred to as a center) or a device outside the automobile via a network (specifically, for example, the Internet, BLUETOOTH (registered trademark), Wi-Fi (registered trademark), a sensor, or the like) . In addition, it is important for such an in-vehicle system to deal with a security attack from the outside, unlike a conventional closed in-vehicle system.

Further, in such an in-vehicle system connected to a network, utilization of OSS (Open-Source Software) for an information processing device and connection of a smartphone or a device whose security is not secured due to use for after-sales service have been considered, and thus there has been a concern of a security attack abusing vulnerability more than before.

Here, in a conventional in-vehicle system, an abnormality handling method in which even in the case where a defect occurs in a part of a device due to breakdown, the abnormality is detected and travelling control such as running, turning, and stopping can be maintained by fail safe (for example, function degeneration) has been considered. For example, according to a vehicle control device disclosed in Patent Literature 1, in the case where a specific abnormal state has been detected by an abnormality detection unit, travelling control in accordance with the state of the vehicle can be realized by changing control content used by a travelling control unit on the basis of one or both of, among events included in an action plan, the type of event being executed under the control of the travelling control unit and the type of event supposed to be executed following the event being executed.

### Citation List

### Patent Literature

[Patent Literature 1] WO 17/010264

### Summary of Invention

### Technical Problem

However, in the case where the abnormality handling method in which control content used by the travelling control unit is changed in accordance with the specific abnormal state detected by the abnormality detection unit is employed as the vehicle control device disclosed in Patent Literature 1, there is a risk that it is difficult to maintain the travelling state of the automobile in a safe state when an abnormality caused by a security attack occurs.

More specifically, in the case where an abnormality caused by a security attack has occurred in an automobile, there is a possibility that the security attack further violates the in-vehicle system even if the control content is changed (for example, changed from normal driving to degeneration driving) in accordance with the abnormal state. Thus, for example, there is a risk that an influence caused by the security attack spreads even to elements configuring degeneration driving. In the vehicle control device disclosed in Patent Literature 1, such an influence caused by the security attack cannot be stopped. As a result, there is a risk that the security attack has a harmful influence on the travelling control of the automobile, and the automobile is put in a dangerous state.

The present invention has been made in consideration of the above-described points, and proposes an information processing device and an abnormality handling method by which even in the case where an abnormality caused by a security attack has occurred in an in-vehicle system, travelling control of an automobile can be maintained in a safe state.

### Solution to Problem

According to the present invention for solving the problem, provided is an information processing device included in an in-vehicle system of a vehicle, the device comprising: an information acquisition unit that collects abnormality information relevant to an abnormality that has occurred in the vehicle; a determination unit that identifies a source of generation of the abnormality that has occurred on the basis of the abnormality information; and a spread prevention processing unit that executes a spread prevention process in which a predetermined function of a target identified by the determination unit is restricted.

In addition, according to the present invention for solving the problem, provided is an abnormality handling method performed by an information processing device included in an in-vehicle system of a vehicle, the method comprising: an information acquisition step of collecting abnormality information relevant to an abnormality that has occurred in the vehicle; a determination step of identifying a source of generation of the abnormality that has occurred on the basis of the abnormality information; and a spread prevention processing step of executing a spread prevention process in which a predetermined function of a target identified in the determination step is restricted.

### Advantageous Effects of Invention

According to the present invention, even in the case where an abnormality caused by a security attack has occurred in an in-vehicle system, travelling control of an automobile can be maintained in a safe state.

### Brief Description of Drawings

FIG. 1 is a block diagram for showing a functional configuration example of an information processing device according to a first embodiment of the present invention.
FIG. 2 is a block diagram for showing a configuration example in a vehicle in which the information processing device shown in FIG. 1 is mounted.
FIG. 3 is a block diagram for showing a hardware configuration example of the information processing device shown in FIG. 1.
FIG. 4 is a flowchart for showing an outline of a processing procedure of an abnormality handling process.
FIGs. 5 are diagrams each describing a data structure example of abnormality information.
FIG. 6 is a diagram for describing a data structure example of abnormality spread information.
FIG. 7 is a diagram for describing a data structure example of driving mode switching information.
FIG. 8 is a flowchart for showing an example of a processing procedure of driving mode influence degree determination.
FIG. 9 is a flowchart for showing an example of a processing procedure of migration destination driving mode extraction.
FIG. 10 is a flowchart for showing an outline of a processing procedure of an abnormality handling process in an information processing device according to a second embodiment of the present invention.
FIG. 11 is a flowchart for showing an example of a processing procedure of spread prevention process determination.
FIG. 12 is a diagram for describing a data structure example of migration allowed time information.
FIG. 13 is a diagram for describing a data structure example of spread prevention determination information.

### Description of Embodiments

Hereinafter, embodiments of the present invention will be described in detail with reference to the drawings.

It should be noted that in each embodiment described below, a method in which an information processing device connected to plural information processing devices (or information processing devices outside a vehicle) in a communicable manner in an in-vehicle system collects information for determining an abnormality (also referred as an abnormal state) from each information processing device and identifies a source of generation of the abnormality and a spread destination candidate to perform a spread prevention process on the basis of the identification will be described as an example of an abnormality handling method of the present invention. However, the technical idea of the present invention is not limited to the example. For example, the present invention may be applied to an information processing device outside a vehicle connected to plural information processing devices in a communicable manner in an in-vehicle system. In addition, safe communication channels using well-known general cryptographic technology may be used for communications between information processing devices or communications with the outside of a vehicle, and a cryptographic key or seed used for these communications may be safely distributed, managed, or updated. For example, the cryptographic key or seed may be distributed or updated at arbitrary timing such as when an engine is started or stopped, when a product is developed, or at the time of maintenance.

### (1) First Embodiment

### (1-1) Configuration of information processing device

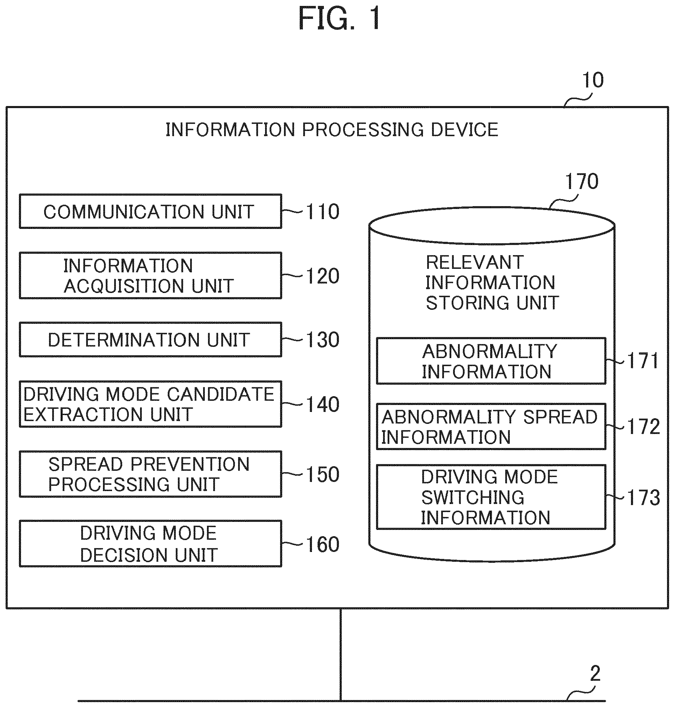

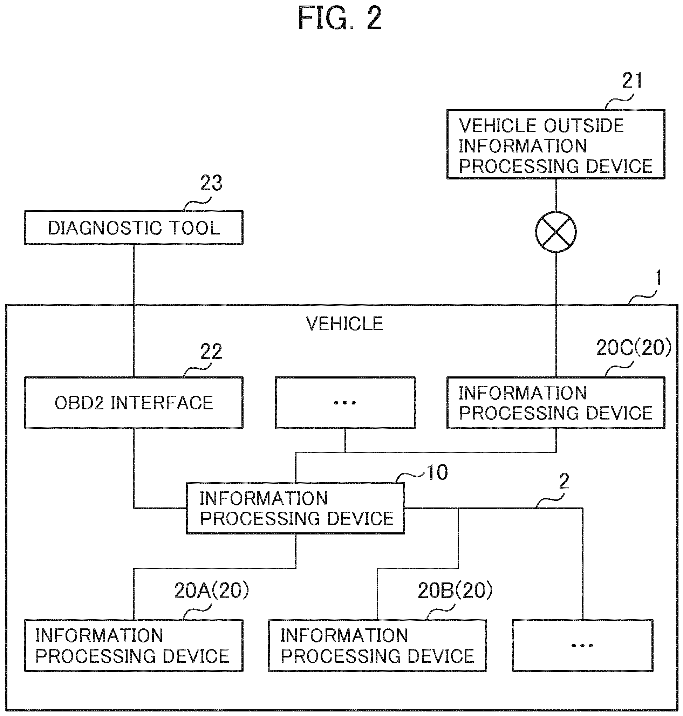

FIG. 1 is a block diagram for showing a functional configuration example of an information processing device according to a first embodiment of the present invention. As shown in FIG. 1, an information processing device 10 according to the first embodiment includes, functional configurations, a communication unit 110, an information acquisition unit 120, a determination unit 130, a driving mode candidate extraction unit 140, a spread prevention processing unit 150, a driving mode decision unit 160, and a relevant information storing unit 170. Abnormality information 171, abnormality spread information 172, and driving mode switching information 173 are stored in the relevant information storing unit 170. In addition, the information processing device 10 is connected to other information processing devices (see FIG. 2) in a communicable manner through communication buses 2.

Here, before describing each functional configuration of the information processing device 10, the entire configuration of the information processing device 10 will be described while focusing on hardware configurations.

First, a configuration of a vehicle in which the information processing device 10 is mounted will be described. FIG. 2 is a block diagram for showing a configuration example in the vehicle in which the information processing device shown in FIG. 1 is mounted. As shown in FIG. 2, the information processing device 10 is one of a plurality of information processing devices mounted in a vehicle 1 that is an automobile, and is one of information processing devices in a so-called in-vehicle system. Specifically, the information processing device 10 is, for example, an ECU (Electrical Control Unit) or a GW-ECU (Gateway ECU). The information processing device 10 is connected to other information processing devices 20 (individually, for example, information processing devices 20A, 20B, and 20C) in a communicable manner through the communication buses 2 in the automobile. The information processing devices 20 are, for example, ECUs as similar to the information processing device 10.

In addition, as exemplified in FIG. 2, the vehicle 1 includes an OBD2 interface 22 as a communication interface for OBD2 (On Board Diagnosis second generation) that is a failure self-diagnosis function of an automobile, and the information processing device 10 (or the information processing devices 20) of the vehicle 1 is connected to an external diagnostic tool 23 in a communicable manner through the OBD2 interface 22. In addition, one (the information processing device 20C exemplified in FIG. 2) of the information processing devices 10 and 20 included in the vehicle 1 is also connected to a vehicle outside information processing device 21 (for example, an information processing device or the like in an external sensor) installed outside through a network such as the Internet.

When viewing such a configuration in FIG. 2 from the information processing device 10, not only the information processing devices 20 (20A, 20B, and 20C) in the vehicle 1 but also the vehicle outside information processing device 21 outside the vehicle 1 can be regarded as an information processing device connected to the information processing device 10 in a communicable manner. Thus, an expression of "other information processing devices 20 communicable with the information processing device 10" in the following description can include an information processing device outside the vehicle such as the above-described vehicle outside information processing device 21.

In addition, the communication buses 2 are physically a plurality of communication buses, and these communication buses may have the same standard or different standards. As the standard of the communication buses 2, there is, for example, CAN, LIN, FlexRay, or Ethernet (each is a registered trademark).

It should be noted that an example configured with a star-type communication in which other plural ECUs are connected to the GW-ECU as the center has been shown in the in-vehicle system of FIG. 2. However, the in-vehicle system including the information processing device 10 according to the embodiment is not limited to this, but may be, for example, a bus-type communication in-vehicle system or the like in which a plurality of ECUs (including the GW-ECU) is connected to reach other.

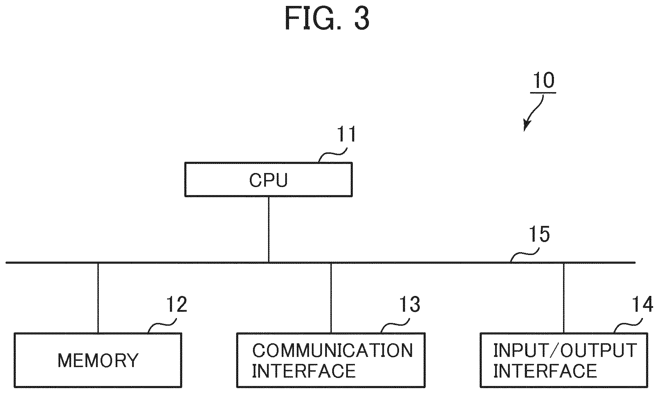

Next, hardware configurations of the information processing device 10 will be described. FIG. 3 is a block diagram for showing a hardware configuration example of the information processing device shown in FIG. 1.

As shown in FIG. 3, the information processing device 10 includes a CPU (Central Processing Unit) 11, a memory 12, a communication interface 13, and an input/output interface 14, all of which are connected to each other through communication buses 15. The memory 12 is a storage medium for storing data, and specifically corresponds to, for example, a ROM, a RAM, or the like. It should be noted that at least a part of the memory 12 is a non-volatile memory. The communication interface 13 is an interface through which the information processing device 10 is communicated with the other information processing devices 20. The input/output interface 14 is an interface used for an input/output process in the information processing device 10, but is not necessarily a required configuration depending on the role or function of the information processing device 10.

The information processing device 10 realizes the functional configurations shown in FIG. 1 with an operation of each hardware configuration. Specifically, for example, the communication unit 110 is realized by the CPU 11 and the communication interface 13. In addition, the information acquisition unit 120, the determination unit 130, the driving mode candidate extraction unit 140, the spread prevention processing unit 150, and the driving mode decision unit 160 are realized in such a manner that the CPU 11 develops a predetermined program stored in the ROM of the memory 12 to the RAM of the memory 12 and executes the same. In addition, the relevant information storing unit 170 is realized by the non-volatile memory 12 (specifically, a ROM, a flash memory, an HDD, or the like).

Next, each functional configuration of the information processing device 10 shown in FIG. 1 will be described.

The communication unit 110 is a communication interface having connection ports the number of which is the same as that of physical communication buses configuring the communication buses 2, and performs an operation necessary for communications among the information processing devices 10 and 20. As a result, the communication unit 110 can transmit and receive communication messages to/from the other information processing devices 20 through the communication buses 2.

The information acquisition unit 120 collects information for determining an abnormal state of each information processing device (the information processing device 10 or the other information processing devices 20) using communications by the communication unit 110. The "abnormal state" corresponds to an abnormal state caused by, for example, a security attack. The information collected by the information acquisition unit 120 is stored in the relevant information storing unit 170 as abnormality information 171.

The determination unit 130 determines an influence on the current driving mode due to the abnormal state on the basis of the abnormality information 171 collected by the information acquisition unit 120, and identifies a source of generation of the abnormal state and a spread destination candidate of the abnormal state.

The driving mode candidate extraction unit 140 extracts candidates for a migration destination (migration destination driving mode) of the driving mode in consideration of the source of generation of the abnormal state and the spread destination candidate identified by the determination unit 130.

The spread prevention processing unit 150 executes a predetermined spread prevention process by notifying a control command to prevent spread of the influence due to the security attack for the source of generation of the abnormal state and the spread destination candidate identified by the determination unit 130.

The driving mode decision unit 160 decides a driving mode to be actually migrated among the candidates for the migration destination driving mode extracted by the driving mode candidate extraction unit 140.

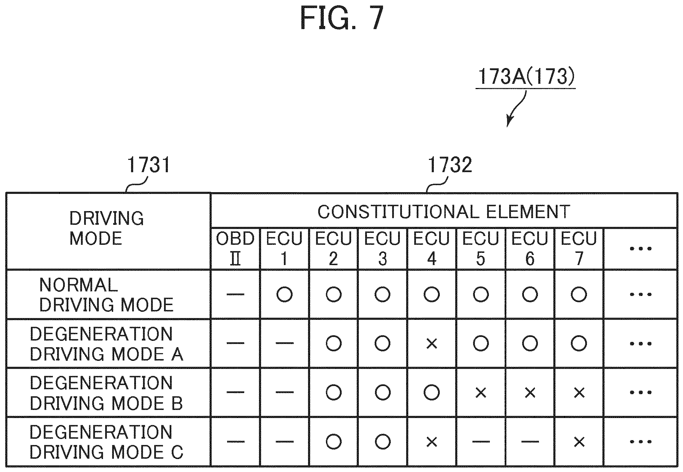

It should be noted that a driving mode in which the function of the vehicle 1 is not limited is referred to as a "normal driving mode" and a driving mode in which the function of the vehicle 1 is limited is referred to as a "degeneration driving mode" in the following description. The normal driving mode is a driving mode to enable, for example, automatic driving. A plurality of kinds of degeneration driving modes (for example, degeneration driving modes A to C exemplified in FIG. 7) may be prepared according to a combination of functions to be limited. As will be described later in detail with reference to FIG. 7, the degeneration driving mode to be migrated when the abnormal state occurs in the embodiment is a driving mode in which travelling can be controlled without including the source of generation (specifically, for example, an occurrence place or a function) of the abnormal state identified by the determination unit 130 in constitutional elements. Further, information for indicating whether the driving mode is the normal driving mode or the degeneration driving mode is stored in the non-volatile memory (for example, the relevant information storing unit 170) included in the information processing device 10, and the information is held even in the case where supplying of power to the information processing device 10 is stopped.

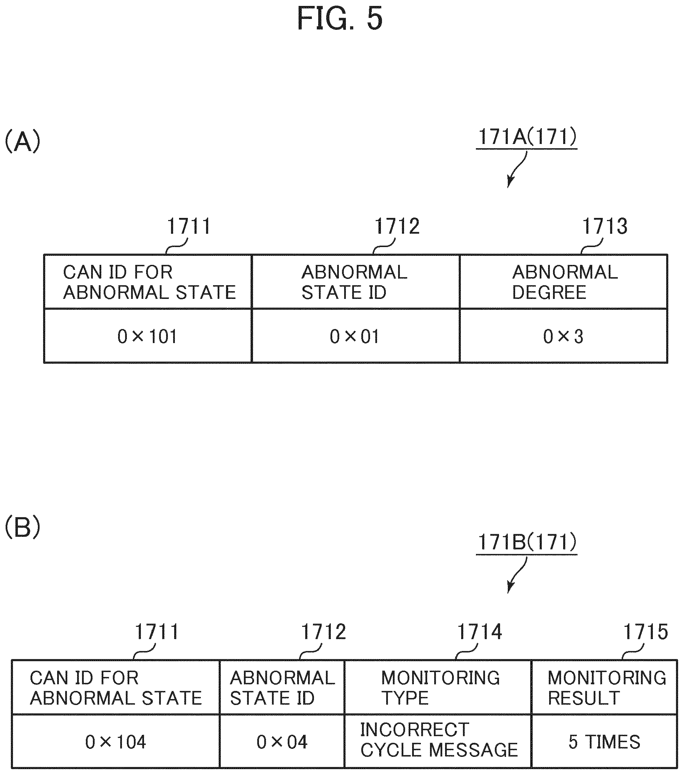

The relevant information storing unit 170 stores information used in an abnormality handling process by the information processing device 10 according to the embodiment. As the information stored in the relevant information storing unit 170, there are, for example, the abnormality information 171 collected to determine the abnormal state of each of the information processing devices 10 and 20, the abnormality spread information 172 to predict the spread of the abnormal state, and the driving mode switching information 173 to determine whether to switch the driving mode. For these pieces of information, concrete examples will be shown later in FIGs. 5, FIG. 6, and FIG. 7.

### (1-2) Abnormality handling process

In the case where the information processing device 10 according to the embodiment detects occurrence of an abnormal state due to a security attack in the information processing device 10 or the other information processing devices, the information processing device 10 executes an "abnormality handling process" to switch travelling control to a safe driving mode without spreading an influence due to the security attack. The abnormality handling process will be described below in detail.

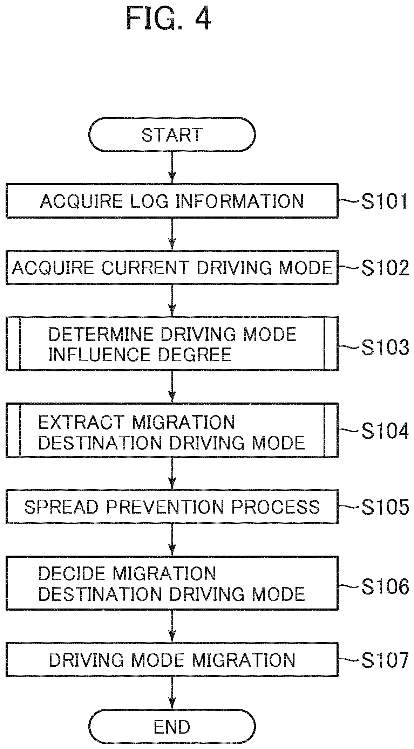

FIG. 4 is a flowchart for showing an outline of a processing procedure of the abnormality handling process . The process shown in FIG. 4 is mainly executed by each functional configuration of the information processing device 10, and is mainly executed by the CPU 11 in terms of hardware.

According to FIG. 4, first in Step S101, the information acquisition unit 120 uses communications by the communication unit 110 to collect information (the abnormality information 171) related to a determination of the abnormal state by, for example, acquiring log information from the other information processing devices 20 connected in a communicable manner through the communication buses 2. At this time, the information acquisition unit 120 collects the abnormality information 171 by, for example, acquiring log information related to a determination of the abnormal state even from the information processing device 10 of the information acquisition unit 120. Further, the abnormality information 171 collected by the information acquisition unit 120 is stored in the relevant information storing unit 170.

It should be noted that when collecting the log information from "the other information processing devices 20" in Step S101, the information acquisition unit 120 may acquire log information related to a determination of the abnormal state even from an external center (vehicle outside information processing device 21) that can be communicated through a network such as the Internet.

After the information acquisition unit 120 collects the abnormality information 171 in Step S101, the process proceeds to Step S102. However, the timing when Step S101 is moved to Step S102 is not particularly limited. For example, when the information acquisition unit 120 acquires log information indicating some kind of abnormal state in Step S101, the process may proceed to Step S102. In addition, for example, on the assumption that the information acquisition unit 120 acquires (collects the abnormality information 171) log information over a predetermined period in Step S101, in the case where a predetermined period of time elapses, the process may proceed to Step S102.

Here, a concrete example of the abnormality information 171 collected in Step S101 will be described with reference to FIGs. 5. FIGs. 5 are diagrams each describing a data structure example of the abnormality information. Each of abnormality information 171A exemplified in FIG. 5(A) and abnormality information 171B exemplified in FIG. 5(B) is an example of log information, and communication messages having different data structures are exemplified.

First, the abnormality information 171A shown in FIG. 5(A) is an example of the communication message in the case where the information processing device (for example, the information processing device 20) as a transmission source of the communication message (log information) monitors the abnormal state in the information processing device itself and an influence degree due to the abnormal state can be determined. According to FIG. 5(A), the abnormality information 171A has a data structure with a CAN ID 1711 for abnormal state, an abnormal state ID 1712, and an abnormal degree 1713.

An identifier (ID) for showing a message to determine the abnormal state is written in the CAN ID 1711 for abnormal state. Different IDs may be allocated to the CAN ID 1711 for abnormal state for each information processing device as a transmission source.

An identifier preliminarily allocated according to the type of the abnormal state is written in the abnormal state ID 1712. It should be noted that "the type of the abnormal state" that can be identified on the basis of the abnormal state ID 1712 may be shown using the type of the abnormal state that has occurred. However, in addition thereto, the type of the abnormal state may be shown using, for example, a place (for example, a unit of the information processing device) where the abnormal state has occurred or a function (for example, a function unit such as a brake, engine control, or sensor recognition) where the abnormal state has occurred. In addition, a value indicating the influence degree due to the abnormal state is written in the abnormal degree 1713.

Next, the abnormality information 171B shown in FIG. 5(B) is an example of the communication message in the case where the information processing device (for example, the information processing device 20) as a transmission source of the communication message (log information) only monitors the abnormal state in the information processing device itself (namely, in the case where the influence degree due to the abnormal state is not determined). In the case where such a communication message is acquired, the influence degree due to the abnormal state may be determined on the information acquisition unit 120 side. According to FIG. 5(B), the abnormality information 171B has a data structure with a CAN ID 1711 for abnormal state, an abnormal state ID 1712, a monitoring type 1714, and a monitoring result 1715.

Among those, the CAN ID 1711 for abnormal state and the abnormal state ID 1712 are the same as those in the abnormality information 171A exemplified in FIG. 5(A), and the explanation thereof will be omitted.

The content of the detected abnormal state is written in the monitoring type 1714, and for example, detection of a communication message in an incorrect cycle, a failure of authentication, an increase in communication traffic, or a status of resource consumption by the CPU or the memory is shown. In addition, a monitoring result in accordance with the monitoring type is written in the monitoring result 1715, and for example, the number of times the abnormal state written in the monitoring type 1714 has occurred or the number of times of exceeding a threshold value is shown.

It should be noted that the data structure of the log information (abnormality information 171) acquired by the information acquisition unit 120 is not limited to the examples of FIG. 5(A) and FIG. 5(B). In addition thereto, for example, an authenticator for falsification detection such as MAC (Message Authentication Code) may be provided, or for example, additional information such as a counter for communications or time information may be included.

With reference to FIG. 4 again, the explanation will be continued from the process of Step S102.

In Step S102, the information acquisition unit 120 acquires the current driving mode of the vehicle 1. Here, as a concrete process of acquiring the driving mode by the information acquisition unit 120, the following processing pattern is conceivable.

First, in the case where the driving mode is managed in the information processing device 10 of itself, the information acquisition unit 120 can acquire the current driving mode by referring to appropriate data or the like stored in the memory 12.

On the other hand, in the case where the driving mode is managed in one of the other information processing devices 20, the information acquisition unit 120 may acquire the current driving mode from the information processing device 20 at the timing of Step S102. In addition thereto, for example, the information acquisition unit 120 may regularly acquire the latest driving mode from the information processing device 20, and may store the same into the memory 12. Then, the information acquisition unit 120 may acquire the stored driving mode as the current driving mode by referring the same at the timing of Step S102. In addition, for example, if change content is notified from the information processing device 20 managing the driving mode to the information processing device 10 at the timing when the driving mode is changed, the content of the notification may be stored in the memory 12 (may be updated by the latest notification content), and the information acquisition unit 120 may acquire the current driving mode by referring to the latest notification content stored in the memory 12 in Step S102.

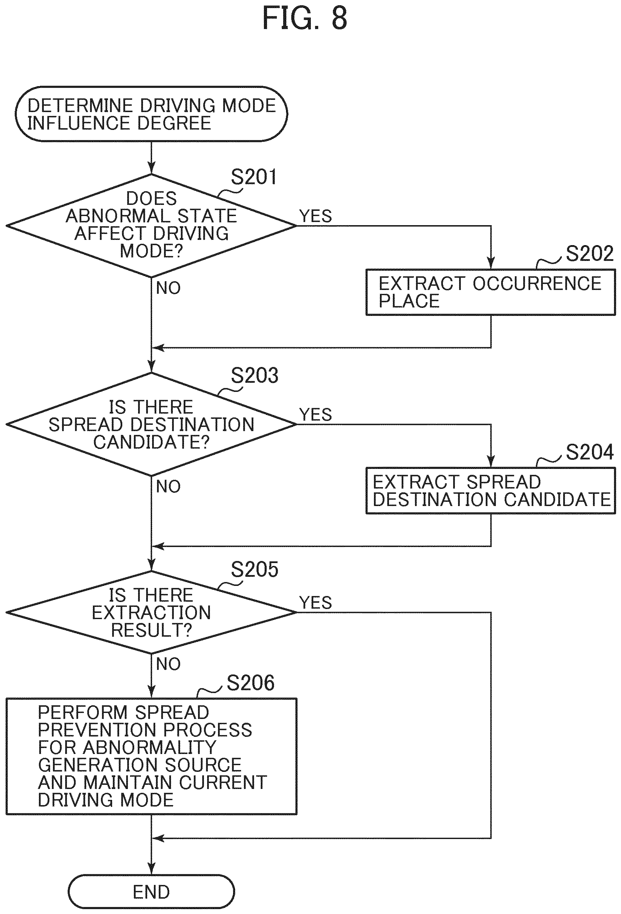

Next, in Step S103, the determination unit 130 identifies the source of generation of the abnormal state and the spread destination candidate of the abnormal state using the abnormality information 171 collected by the information acquisition unit 120 in Step S101 and the abnormality spread information 172 stored in the relevant information storing unit 170, and determines (driving mode influence degree determination) the influence degree on the current driving mode due to the abnormal state. The detail of the driving mode influence degree determination will be described later with reference to FIG. 8.

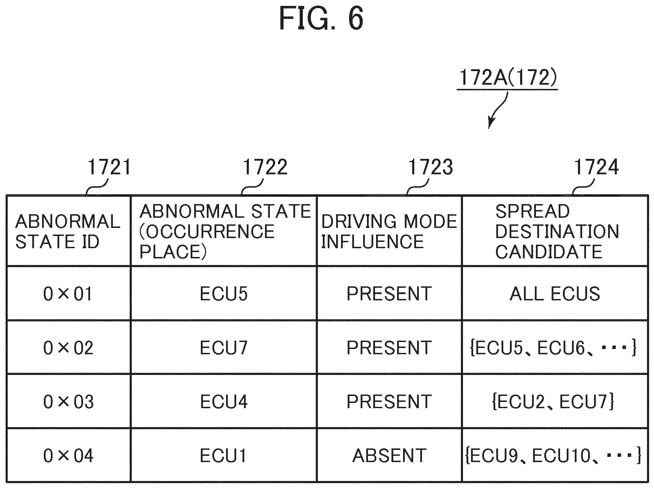

Here, a concrete example of the abnormality spread information 172 referred to in S103 will be described with reference to FIG. 6.

FIG. 6 is a diagram for describing a data structure example of the abnormality spread information. According to FIG. 6, abnormality spread information 172A has a data structure with an abnormal state ID 1721, an abnormal state 1722, a driving mode influence 1723, and a spread destination candidate 1724.

An identifier allocated according to the type of the abnormal state is written in the abnormal state ID 1721, and is an identifier common to the abnormal state ID 1712 in the abnormality information 171 (171A and 171B). "The type of the abnormal state" that can be identified on the basis of the abnormal state ID 1721 may be shown using the type of the abnormal state that has occurred as described in FIGs. 5(A) and 5(B). However, in addition thereto, the type of the abnormal state may be shown using, for example, a place where the abnormal state has occurred or a function where the abnormal state has occurred. In the case of FIG. 6, an example of a place (occurrence place) where the abnormal state has occurred is shown.

The type of the abnormal state identified on the basis of the abnormal state ID 1721 is written in the abnormal state 1722. As described in the previous paragraph, in the case where an identifier for identifying the "occurrence place" of the abnormal state is written in the abnormal state ID 1721, the "occurrence place" is written in the abnormal state 1722. Specifically, the occurrence place of the abnormal state is shown in FIG. 6 on an information processing device basis such as "ECU5" or "ECU7".

Information indicating whether or not the abnormal state shown in the abnormal state 1722 has an influence on the current driving mode is written in the driving mode influence 1723. Specifically, "present" in FIG. 6 means that the abnormal state has an influence on the current driving mode, and "absent" means that the abnormal state has no influence on the current driving mode. For example, in the case where the occurrence place of the abnormal state is shown in the abnormal state 1722, the driving mode influence 1723 is set in accordance with the occurrence place. As a concrete setting method, for example, the presence or absence of an influence on the basis of the occurrence place of the abnormal state may be set in accordance with a result of a security analysis conducted in advance, or the presence or absence of an influence may be updated and set in accordance with a state during travelling.

A candidate such as a device to which the abnormal state shown in the abnormal state 1722 possibly spreads is shown in the spread destination candidate 1724. For example, in the case of the data sections in the first row of FIG. 6, "ECU5" is written in the abnormal state 1722, and "all ECUs" is written in the spread destination candidate 1724. Namely, this means that when the occurrence place of the abnormal state is "ECU5", the abnormal state possibly spreads to all the ECUs (for example, all the information processing devices 20) in the vehicle 1. It should be noted that as a setting method of the spread destination candidate 1724 on the basis of the abnormal state 1722, for example, the spread destination candidate on the basis of the occurrence place of the abnormal state may be set in accordance with a result of a security analysis conducted in advance, or the spread destination candidate may be updated and set in accordance with a state during travelling as similar to the above-described driving mode influence 1723.

It should be noted that the abnormality spread information 172 may be set for each driving mode in the information processing device 10 according to the embodiment. In this case, if the abnormality spread information 172A exemplified in FIG. 6 is used as the abnormality spread information 172 for the normal driving mode, the abnormality spread information 172 for each degeneration driving mode separately from the abnormality spread information 172A is stored in the relevant information storing unit 170 (not shown in the drawing).

With reference to FIG. 4 again, after the driving mode influence degree determination is performed by the determination unit 130 in Step S103, the process of Step S104 is performed.

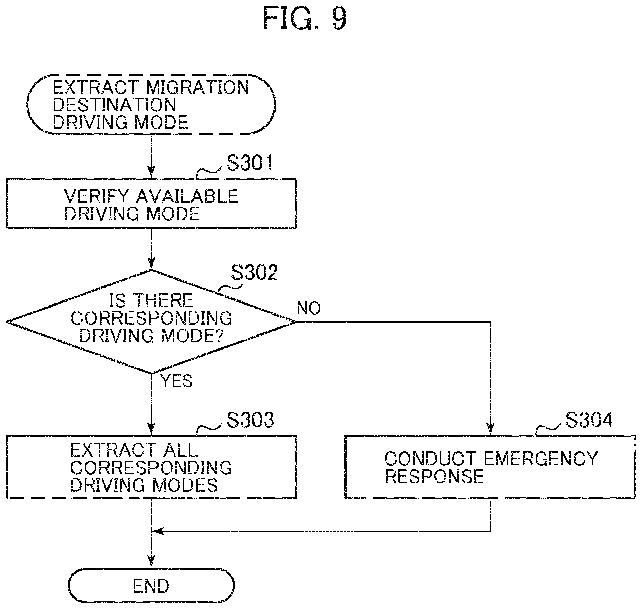

In Step S104, the driving mode candidate extraction unit 140 extracts a driving mode that can be used even when the abnormal state occurs as the migration destination of the driving mode in consideration of the influence due to the abnormal state using the information (the source of generation of the abnormal state, the spread destination candidate, and the like) identified by the driving mode influence degree determination in Step S103 and the driving mode switching information 173 stored in the relevant information storing unit 170 (migration destination driving mode extraction). The detail of the migration destination driving mode extraction will be described later with reference to FIG. 9.

Here, a concrete example of the driving mode switching information 173 referred to in Step S104 will be described with reference to FIG. 7.

FIG. 7 is a diagram for describing a data structure example of the driving mode switching information. According to FIG. 7, driving mode switching information 173A has a data structure with a driving mode 1731 showing the type of the driving mode and a constitutional element 1732 showing a list of elements to configure the driving mode shown in the driving mode 1731.

Specifically, in the case of FIG. 7, "normal driving mode" and three kinds of "degeneration driving modes (degeneration driving modes A to C) " are shown in the driving mode 1731. As the characteristics of each driving mode, for example, the normal driving mode is a highest-performance (multi-functional) driving mode in which the function of the vehicle 1 is not limited, and is also a driving mode of enabling automatic driving. On the other hand, the degeneration driving mode is a driving mode in which come function is limited as compared to the normal driving mode. When the functions to be limited are entirely seen, the limitation of the functions gradually becomes larger in the order of the degeneration driving modes A, B, and C (low performance far from automatic driving) .

Further, necessity for each constitutional element in the vehicle 1 in each driving mode of the driving mode 1731 is indicated by "o", "×", or "-" in the constitutional element 1732. "o" means a necessary constitutional element in the driving mode (namely, when the abnormal state occurs in the constitutional element, the driving mode is influenced), and "×" means that even when the abnormal state occurs in the constitutional element, the driving mode is not influenced. In addition, "-" means that the driving mode is not influenced irrespective of the presence or absence of occurrence of the abnormal state in the constitutional element.

It should be noted that in the driving mode switching information 173, each device of the in-vehicle system is not limited to be set as a unit of the "constitutional element" such as "ECU1", "ECU2", and so on in the constitutional element 1732 of FIG. 7, but the "constitutional element" may be set in, for example, a function unit such as a brake, engine control, or sensor recognition.

Next, in Step S105, the spread prevention processing unit 150 executes a predetermined spread prevention process for the source of generation of the abnormal state and the spread destination candidate identified by the driving mode influence degree determination in Step S103 to prevent the influence due to the abnormal state. In the spread prevention process, the spread prevention processing unit 150 notifies at least one of the devices (or functions) identified as the sources of generation of the abnormal state or the spread destination candidates of a control command imposing some predetermined functional limitation.

Specifically, for the functional limitation in the spread prevention process, for example, in order to prevent the device (for example, the information processing device 20A) of the source of generation of the abnormal state from making an incorrect action, the spread prevention processing unit 150 notifies the device of the source of generation of a command for shutdown to turn off the power supply of the device of the source of generation. In addition, for example, the spread prevention processing unit 150 may notify the device (for example, the information processing device 20B) of the spread destination candidate in the abnormal state of a command for activating a communication filter function or a command for updating the white list or the black list of the communication filter function so as not to accept communications from the device (for example, the information processing device 20A) of the source of generation of the abnormal state.

It should be noted that a target on which such a limitation is imposed is not limited to the other information processing devices 20 in the spread prevention process by the spread prevention processing unit 150, but the limitation may be imposed on the information processing device 10 of the spread prevention processing unit 150.

Next, in Step S106, the driving mode decision unit 160 selects (decides) a safer driving mode among the migration destination driving modes extracted in Step S104 as a driving mode to be actually migrated. Here, the driving mode decision unit 160 can select and decide a driving mode in which safe travelling control of the vehicle 1 can be maintained in consideration of the execution status of the spread prevention process of Step S105.

For example, concrete decision methods of Step S106 in the embodiment are as follows.

First, in the case where one candidate is identified for the migration destination driving mode extracted in the migration destination driving mode extraction of Step S104, the driving mode decision unit 160 decides the identified migration destination driving mode as the driving mode to be actually migrated.

In the case where the driving mode is decided in the first method, the driving mode of the migration destination can be easily decided among the candidates for the migration destination driving mode extracted in consideration of the source of generation of the abnormal state and the spread destination candidate in Step S104 without performing a complicated process by the driving mode decision unit 160 in Step S106. As a result, when the abnormal state occurs, it is possible to obtain an effect that the driving mode can be quickly switched to a safer mode.

Second, in the case where there are plural candidates for the migration destination driving mode extracted in the migration destination driving mode extraction of Step S104 and the spread prevention process of Step S105 has been completed, the driving mode decision unit 160 decides a more advanced (high-performance) driving mode as the driving mode to be actually migrated among the plural candidates for the migration destination driving mode. Here, the more advanced driving mode means, for example, a driving mode in which functions to be provided in the automatic driving travel are more fulfilled. Specifically, in the case where there are four driving modes exemplified in FIG. 7, it can be determined that the normal driving mode is the most advanced driving mode, the degeneration driving mode A is the second advanced driving mode, the degeneration driving mode B is the third advanced driving mode, and the degeneration driving mode C is the least advanced driving mode.

In the case where the driving mode is decided in the second method, even if there are plural candidates for the migration destination driving mode extracted in consideration of the source of generation of the abnormal state and the spread destination candidate in Step S104, the most advanced driving mode among those can be decided as the driving mode of the migration destination. Thus, even if the driving mode is degenerated to a safer mode against the abnormal state, it is possible to expect an effect that the functional limitation due to the degeneration and a burden on a driver can be minimized.

Third, in the case where there are plural candidates for the migration destination driving mode extracted in the migration destination driving mode extraction of Step S104 and the spread prevention process of Step S105 has not been completed, the driving mode decision unit 160 decides a specific safe driving mode irrelevant to the spread prevention process as the driving mode to be actually migrated. Here, the "specific safe driving mode" may be, for example, a driving mode configured using constitutional elements (devices or functions) that are not connected to the outside of the vehicle 1 although the number of functions to be provided is small, or a driving mode configured using devices of a different system that can be switched only when the abnormal state occurs.

A case in which the driving mode is decided in the third method is a case in which a safe driving mode to be migrated in the first method or the second method cannot be decided, and it can be assumed that a serious abnormal state has occurred. Thus, in the case of such a serious abnormal state, the safety of passengers of the vehicle 1 can be secured as the highest priority by deciding the driving mode as the preliminarily-prepared "specific safe driving mode".

Finally, in Step S107, the driving mode decision unit 160 notifies a device (for example, any one of the information processing devices 20) controlling a change of the driving mode of an instruction of migration to the driving mode decided in Step S106 using the communication unit 110. Then, the device that has received the notification changes the driving mode in accordance with the notification, and thus the driving mode of the vehicle 1 can be switched. It should be noted that in the case where the information processing device 10 itself is a device that controls a change of the driving mode, a driving mode change control unit (not shown in the drawing) of the information processing device 10 may switch the current driving mode to the driving mode decided in Step S106.

As described above, the abnormality handling process can be executed by performing the processes of Steps S101 to S107 of FIG. 4.

### (1-3) Driving mode influence degree determination

The driving mode influence degree determination (Step S103 of FIG. 4) in the abnormality handling process executed by the information processing device 10 according to the embodiment will be described in detail.

FIG. 8 is a flowchart for showing an example of a processing procedure of the driving mode influence degree determination. As described in (1-2), each process shown in FIG. 8 is executed by the determination unit 130 of the information processing device 10.

In addition, in the following description related to FIG. 8, described is an example of a case in which in the abnormality information 171 and the abnormality spread information 172 to be referred to in the driving mode influence degree determination, the "type of abnormal state" that can be identified from the information is shown by a "place" where the abnormal state has occurred. However, as described in (1-2), the embodiment is not limited to this, but the "place" can be replaced by the "type" of the abnormal state or the "function" where the abnormal state has occurred.

According to FIG. 8, in the first place, the determination unit 130 determines whether or not the abnormal state shown in the abnormality information 171 collected in Step S101 (see FIG. 4) of the abnormality handling process influences on the current driving mode (Step S201).

Here, the process of Step S201 will be described in detail. First, the determination unit 130 refers to the abnormality spread information 172 corresponding to the current driving mode of the vehicle 1 acquired in Step S102 of the abnormality handling process. Specifically, for example, on the assumption that the current driving mode is the normal driving mode, the abnormality spread information 172A exemplified in FIG. 6 is referred to.

Next, the determination unit 130 acquires the abnormal state ID 1712 of the abnormal state that has occurred from the abnormality information 171 collected in Step S101 of the abnormality handling process. Specifically, for example, on the assumption that the abnormality information 171A exemplified in FIG. 5(A) is collected, "0x01" is acquired as the abnormal state ID1712.

Then, the determination unit 130 can determine whether or not the abnormal state that has occurred influences on the current driving mode by referring to the driving mode influence 1723 corresponding to the abnormal state ID "0x01" of the abnormal state that has occurred in the abnormality spread information 172 (abnormality spread information 172A) corresponding to the current driving mode. In the case of the concrete example, the driving mode influence 1723 corresponding to "0x01" of the abnormal state ID 1721 in the abnormality spread information 172A is "present", and thus it is determined to influence on the current driving mode. If the driving mode influence 1723 is "absent", it is determined not to influence on the current driving mode.

The determination unit 130 performs the process of Step S201 as described above. In the case where it is determined to influence on the current driving mode (YES in Step S201), the process of Step S202 is performed. In the case where it is determined not to influence on the current driving mode in Step S201 (NO in Step S201), the process proceeds to Step S203.

In Step S202, the determination unit 130 extracts the source of generation of the abnormal state (the occurrence place of the abnormal state in the case of the description) determined to influence on the current driving mode in Step S201. More specifically, the determination unit 130 extracts the occurrence place (for example, "ECU5") of the abnormal state by referring to the abnormal state 1722 corresponding to the abnormal state ID "0x01" of the abnormal state that has occurred in the abnormality spread information 172 (abnormality spread information 172A) corresponding to the current driving mode. When the process of Step S202 is completed, the process proceeds to Step S203.

In Step S203, the determination unit 130 determines whether or not there is a device (spread destination candidate) to which the abnormal state possibly spreads from the occurrence place. More specifically, the determination unit 130 can determine the presence or absence of a spread destination candidate by referring to the spread destination candidate 1724 corresponding to "0x01" of the abnormal state ID 1721 in the abnormality spread information 172A referred to in Step S201.

In the case where it is determined that there is a spread destination candidate (YES in Step S203), the determination unit 130 extracts the determined spread destination candidate 1724 (Step S204). After the process of Step S204 or in Step S203, in the case where it is determined that there is no spread destination candidate (NO in Step S203), the process proceeds to Step S205.

In Step S205, the determination unit 130 determines whether or not any one of the source of generation (occurrence place) of the abnormal state that influences on the current driving mode and the spread destination candidate to which the abnormal state possibly spreads from the source of generation of the abnormal state has been extracted after the processes of Steps S201 to S204. Namely, in Step S202 or Step S204, it is determined whether or not there is an extraction result of the source of generation (occurrence place) of the abnormal state or the spread destination candidate.

In the case where it is determined that there is an extraction result in Step S205 (YES in Step S205), it means that an influence (including a possibility that the abnormal state spreads to another device) on the current driving mode by the abnormal state that has occurred exists, and the determination unit 130 finishes the process of the driving mode influence degree determination.

On the other hand, in the case where it is determined that there is no extraction result in Step S205 (NO in Step S205), it means that there is no influence (there is no possibility that the abnormal state spreads to another device) on the current driving mode by the abnormal state although the abnormal state has occurred. At this time, as the process of Step S206, the determination unit 130 performs a predetermined spread prevention process for the source of generation (occurrence place) of the abnormal state, and controls to maintain the current driving mode. Then, the process of the driving mode influence degree determination is completed.

It should be noted that the control to maintain the current driving mode in Step S206 may be conducted by the driving mode decision unit 160 instead of the determination unit 130. In addition, in view of the condition that there is no influence on the current driving mode, only the control to maintain the current driving mode may be conducted without performing a predetermined spread prevention process for the source of generation (occurrence place) of the abnormal state in Step S206.

By performing the processes of Steps S201 to S206 as described above, the information processing device 10 can identify the source of generation (occurrence place) of the abnormal state and the spread destination candidate, and can determine the degree of an influence on the current driving mode.

### (1-4) Migration destination driving mode extraction

The migration destination driving mode extraction (Step S104 of FIG. 4) in the abnormality handling process executed by the information processing device 10 according to the embodiment will be described in detail.

FIG. 9 is a flowchart for showing an example of a processing procedure of the migration destination driving mode extraction. As described in (1-2), each process shown in FIG. 9 is executed by the driving mode candidate extraction unit 140 of the information processing device 10.

In addition, in the following description related to FIG. 9, as similar to the driving mode influence degree determination described with reference to FIG. 8, described is an example of a case in which in the abnormality information 171 and the abnormality spread information 172 to be referred to in the migration destination driving mode extraction, the "type of abnormal state" that can be identified from the information is shown by a "place" where the abnormal state has occurred. However, as described in (1-2), the embodiment is not limited to this, but the "place" can be replaced by the "type" of the abnormal state or the "function" where the abnormal state has occurred.

According to FIG. 9, in the first place, the driving mode candidate extraction unit 140 refers to the source of generation (occurrence place) of the abnormal state and the driving mode switching information 173 to verify the presence or absence of a driving mode that can be used even when the abnormal state has occurred (Step S301).

Specifically, the process of Step S301 can be realized by the following procedure. For example, it is assumed that "0x01" of the abnormal state ID is shown in the abnormality information 171 collected in the log information acquisition (Step S101 of FIG. 4). At this time, a device influenced by the abnormal state can be identified by referring to the abnormal state 1722 and the spread destination candidate 1724 corresponding to "0x01" of the abnormal state ID of the abnormal state that has occurred in the abnormality spread information 172 corresponding to the current driving mode. Specifically, for example, it is assumed that the abnormal state 1722 (occurrence place) corresponding to "0x01" of the abnormal state ID is "ECU5" and the spread destination candidate 1724 is "ECU7". At this time, the driving mode candidate extraction unit 140 can verify the presence or absence of a driving mode that can be used even when the abnormal state has occurred by searching for the driving mode that is not influenced by "ECU5" and "ECU7" with reference to the driving mode switching information 173. For example, in the case of the driving mode switching information 173A exemplified in FIG. 7, a degeneration driving mode B and a degeneration driving mode C match the driving modes that are not influenced by "ECU5" and "ECU7".

Next, in Step S302, the driving mode candidate extraction unit 140 determines whether or not there has been a driving mode that can be used in the verification of Step S301.

In the case where there has been a driving mode that can be used in Step S302 (YES in Step S302), the driving mode candidate extraction unit 140 extracts all the corresponding driving modes that can be used (Step S303), and finishes the process of the migration destination driving mode extraction.

On the other hand, in the case where there has been no driving mode that can be used in Step S302 (NO in Step S302), the driving mode candidate extraction unit 140 controls to conduct a predetermined emergency response that is preliminarily defined (Step S304), and finishes the process of the migration destination driving mode extraction. Here, as the "predetermined emergency response", for example, the vehicle 1 may be forced to drive automatically to immediately stop at a road shoulder, or automatic driving may be switched to manual driving. In addition, for example, an emergency message may be sent to a driver or a service center.

By performing the processes of Steps S301 to S304 in FIG. 9 as described above, the information processing device 10 can extract a driving mode that can be used even when the abnormal state has occurred as the migration destination of the driving mode in consideration of an influence by the abnormal state on the basis of the identified source of generation (occurrence place) of the abnormal state.

### (1-5) Conclusion

As described above, by performing the abnormality handling process according to the processing procedures exemplified in FIG. 4, FIG. 8, and FIG. 9, the information processing device 10 according to the embodiment collects information to determine the abnormal state, and identifies the source of generation of the abnormal state and the spread destination candidate on the basis of the collected information. Further, the information processing device 10 executes the spread prevention process for the identified device, and considers spread of the abnormal state. Accordingly, the information processing device 10 can switch the driving mode of the vehicle 1 to a safe driving mode that is not influenced by the abnormal state.

According to such an information processing device 10, for example, when the driving mode is migrated to the degeneration driving mode on the basis of occurrence of the abnormal state in the normal driving mode, not only the source of generation of the abnormal state, but also the spread destination candidate to which the abnormal state possibly spreads from the source of generation can be identified, and the spread prevention process can be executed for these identified targets . Thus, it is possible to obtain an effect that an influence due to a security attack is not spread to elements configuring the degeneration driving mode and the travelling control of the automobile (vehicle 1) can be maintained in a safer state against the occurrence of the abnormal state.

It should be noted that the above-described effect obtained by the information processing device 10 according to the embodiment is effectively exerted in particular when the abnormal state that has occurred is caused by a security attack. The security attack has characteristics not only to cause an abnormal state in a specific device or function but also to further violate another device or function to spread the abnormal state. In the case where the abnormal state caused by the security attack has occurred, there is a risk that an influence by the security attack spreads even to elements configuring, for example, degeneration driving even if control content is changed (for example, the normal driving is changed to the degeneration driving) in accordance with the abnormal state. In order to eliminate such a risk, the information processing device 10 according to the embodiment can execute the spread prevention process even for the spread destination candidate of the abnormal state. Accordingly, it is possible to prevent the influence by the security attack from spreading and to maintain the travelling control of the automobile in a safer state.

It should be noted that the abnormality handling process performed by the information processing device 10 according to the embodiment is not limited to the processing procedure exemplified in FIG. 4 or the like, but may be replaced by various derivative processing procedures or various derivative processing procedures may be added. For example, when the occurrence of the abnormal state is confirmed in Step S101 of FIG. 4, the driving mode may be migrated to the "specific safe driving mode" once, and then the processes of Steps S102 to S107 may be performed. In such a case, the safety of passengers can be secured as the highest priority when the abnormal state occurs, and the safe travelling control of the vehicle 1 can be maintained.

### (2) Second Embodiment

A second embodiment of the present invention is common in the major part of basic processes to the first embodiment described in detail in (1). Constitutional elements and processing procedures same as those in the first embodiment are followed by the same signs, and the duplicated explanation will be omitted. Hereinafter, the second embodiment will be described in detail while focusing on points different from the first embodiment.

It should be noted that in the following description, as similar to the detailed description in the first embodiment, described is an example of a case in which the "type of abnormal state" is shown by a "place (more specifically, a device)" where the abnormal state has occurred. However, the second embodiment is not limited to this, but the "place" can be replaced by the "type" of the abnormal state or the "function" where the abnormal state has occurred.

### (2-1) Abnormality handling process

The second embodiment is mainly different from the first embodiment in that a process obtained by adding a view point of an allowed time in the spread prevention process performed in the abnormality handling process is provided. In more detail, in the abnormality handling process of the second embodiment, the information processing device 10 executes the spread prevention process in consideration of the "allowed time" that does not influence on real-time control in an automobile (vehicle 1).

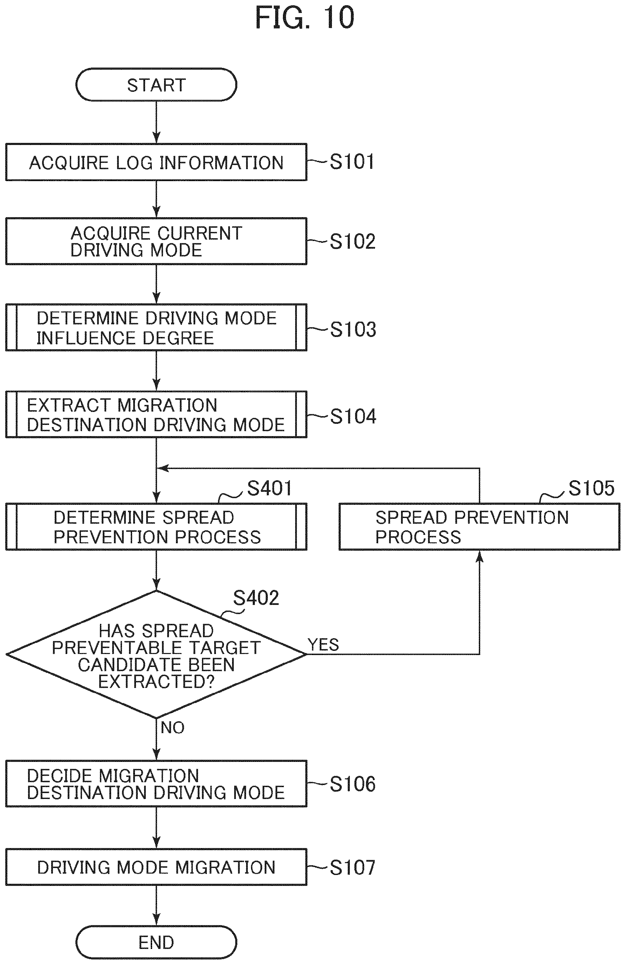

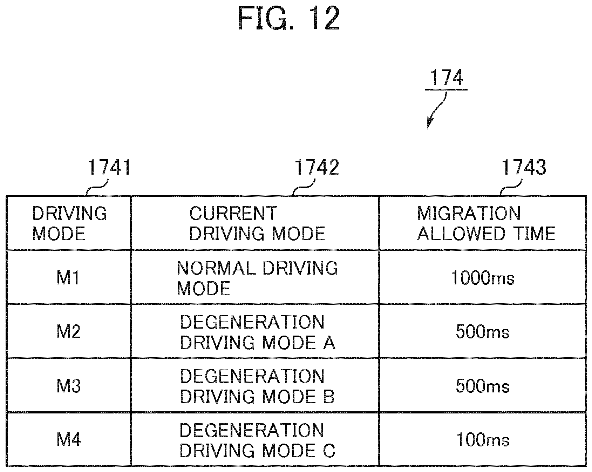

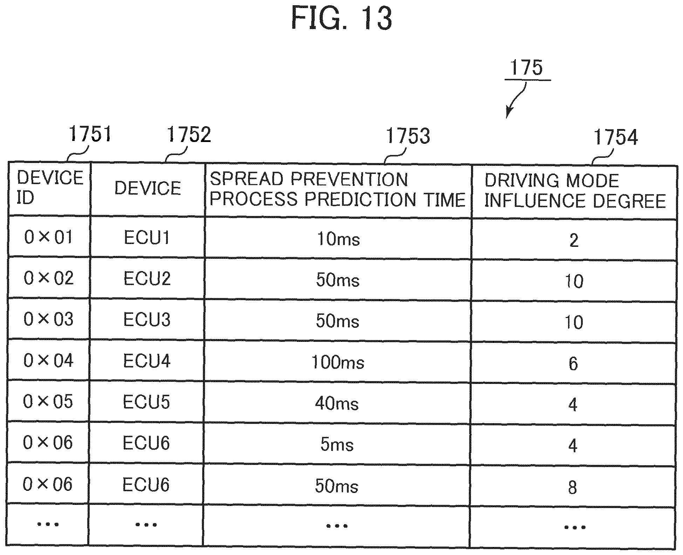

FIG. 10 is a flowchart for showing an outline of a processing procedure of the abnormality handling process in an information processing device according to the second embodiment of the present invention. The process shown in FIG. 10 is mainly executed by each functional configuration of the information processing device 10, and is mainly executed by the CPU 11 in terms of hardware. It should be noted that in the information processing device 10 according to the second embodiment, migration allowed time information 174 and spread prevention determination information 175 are stored in the relevant information storing unit 170 in addition to the functional configurations exemplified in FIG. 1. The details of the migration allowed time information 174 and the spread prevention determination information 175 will be described later with reference to FIG. 12 and FIG. 13.

According to FIG. 10, in the first place, the processes of Steps S101 to S104 are the same as those of the first embodiment. After the migration destination driving mode extraction is performed in Step S104, the process of S401 is performed.

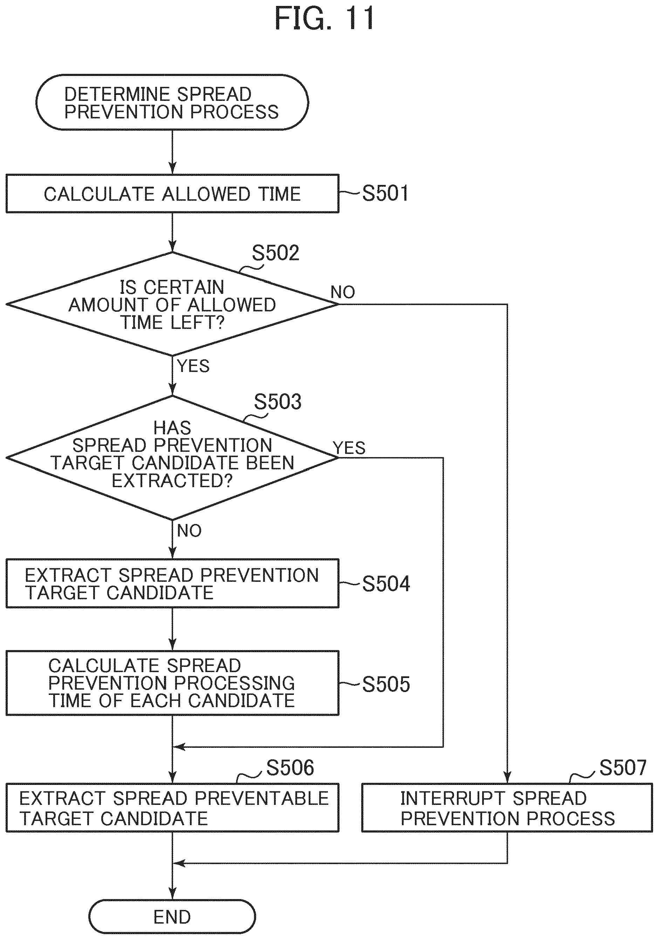

In Step S401, the spread prevention processing unit 150 determines whether or not the spread prevention process can be executed on the basis of whether or not the spread prevention process can be completed within a migration allowed time (to be described later in detail) set in accordance with the driving mode (spread prevention process determination). Although the detail of the spread prevention process determination will be described later with reference to FIG. 11, a candidate for which the spread prevention process can be executed within the allowed time and which largely influences on the driving mode is extracted among the sources of generation of the abnormal state and the spread destination candidates as a "spread preventable target candidate" in the spread prevention process determination of Step S401 (Step S506 of FIG. 11).

Next, in Step S402, the spread prevention processing unit 150 determines whether or not the "spread preventable target candidate" has been extracted as a result of the spread prevention process determination of Step S401. In the case where the spread preventable target candidate has been extracted (YES in Step S402), the process proceeds to Step S105. In the case where the spread preventable target candidate has not been extracted (NO in Step S402), the process proceeds to Step S106.

In Step S105, the spread prevention processing unit 150 executes a predetermined spread prevention process for a device (a device for which the spread prevention process is possibly completed within the allowed time and which largely influences on the driving mode among the sources of generation of the abnormal state and the spread destination candidates) corresponding to the "spread preventable target candidate" determined in Step S402. The execution content of the spread prevention process is the same as that in the first embodiment (Step S105 of FIG. 4).

After the spread prevention process is performed in Step S105, the process returns to Step S401 again to perform the spread prevention process determination. The processes of Steps S401 to S105 are repeated every time the "spread preventable target candidate" that can be completed within the remaining allowed time is extracted. It should be noted that the allowed time is subtracted with the elapse of time from the detection of the occurrence of the abnormal state in the loop, and the device extracted as the "spread preventable target candidate" for which the spread prevention process (Step S105) was executed is not extracted as the "spread preventable target candidate" thereafter again. By performing such processes, the information processing device 10 can sequentially execute the spread prevention process for the source of generation of the abnormal state and the spread destination candidate in consideration of the allowed time that does not influence on real-time control.

Thereafter, the information processing device 10 performs the processes of Step S106 (migration destination driving mode decision) and Step S107 (driving mode migration) as similar to the first embodiment, and the abnormality handling process is finished.

### (2-2) Spread prevention process determination

The spread prevention process determination (Step S401 of FIG. 10) in the abnormality handling process executed by the information processing device 10 according to the embodiment will be described in detail.

FIG. 11 is a flowchart for showing an example of a processing procedure of the spread prevention process determination. The spread prevention process determination is the process (Step S401 of FIG. 10) to determine whether or not the spread prevention process can be executed, and is executed by the spread prevention processing unit 150 of the information processing device 10.

According to FIG. 11, in the first place, the spread prevention processing unit 150 calculates an available time (allowed time) for the spread prevention process in Step S501. In more detail, in the case of the first time in which the process of Step S501 is performed for the first time after the abnormal state has occurred, the spread prevention processing unit 150 refers to the migration allowed time information 174 stored in the relevant information storing unit 170, and calculates the migration allowed time (migration allowed time 1743 of FIG. 12) set for each driving mode as the allowed time. On the other hand, in the case where the process of Step S501 is performed other than the first time, the spread prevention processing unit 150 calculates a time obtained by subtracting the elapse of time after the occurrence of the abnormal state from the migration allowed time as the allowed time.

Here, with reference to FIG. 12, the migration allowed time information 174 to be referred to in Step S501 will be concretely described.

FIG. 12 is a diagram for describing a data structure example of the migration allowed time information. The migration allowed time information 174 is information in which the migration allowed time for each current driving mode is written, and is stored in, for example, the relevant information storing unit 170.

According to FIG. 12, the migration allowed time information 174 has a data structure with a driving mode ID 1741, a current driving mode 1742, and a migration allowed time 1743. In the driving mode ID 1741, an identifier allocated to identify the driving mode mounted in the vehicle 1 is written, and each type of driving mode is written in the current driving mode 1742. In the migration allowed time 1743, the available time (migration allowed time) which is set in association with each driving mode and in which the spread prevention process is executed without influencing the travelling control is written.

It should be noted that as the migration allowed time in association with each driving mode, a static time may be preliminarily decided on the basis of a specification required in a design stage, but the available time for executing the spread prevention process without influencing on the travelling control may be dynamically calculated and registered on the basis of a vehicle state and a surrounding environment state.

Further, the "vehicle state" corresponds to, for example, a current driving mode or a travelling state (being travelling, being stopped, or the like), and the "surrounding environment state" corresponds to, for example, a disturbance such as weather, a road state, or a travelling place (a freeway, an urban area, or the like) . As a calculation example of the migration allowed time on the basis of such a vehicle state or a surrounding environment state, in the case where the vehicle is travelling or the weather is rainy, quick control is required, and thus the migration allowed time is preferably set relatively short. On the other hand, in the case where the vehicle is being stopped, quick control is not required, and thus the migration allowed time may be set relatively long.

Next, in Step S502, the spread prevention processing unit 150 determines whether or not the allowed time calculated in Step S501 is equal to or longer than a predetermined certain amount of time. Here, the "certain amount of time" corresponds to the minimum time required to execute the spread prevention process. Namely, in order to execute the spread prevention process without influencing on real-time control in the vehicle 1, it is necessary that at least the "certain amount of time" or longer remains as the allowed time.

It should be noted that as a concrete value of the "certain amount of time", as similar to the migration allowed time 1743 (see FIG. 12) in association with the driving mode, a static time may be preliminarily decided on the basis of a specification required in a design stage, or a time necessary for executing the spread prevention process without influencing on the travelling control may be dynamically calculated and registered on the basis of a vehicle state and a surrounding environment state.

In the case where it is determined that the certain amount of time or longer remains as the allowed time in Step S502 (YES in Step S502), it means that there is a possibility that the spread prevention process can be executed within the allowed time, and the process proceeds to Step S503. On the other hand, in the case where it is determined that the certain amount of time or longer does not remain as the allowed time in Step S502 (NO in Step S502), it means that there is no time to execute the spread prevention process, and the process proceeds to Step S507.

In Step S503, the spread prevention processing unit 150 determines whether or not a "spread prevention target candidate" has been already extracted. The extraction of the "spread prevention target candidate" will be described in detail in Step S504. In the case where it is determined that the "spread prevention target candidate" has been already extracted (YES in Step S503), the process proceeds to Step S506. In the case where it is determined that the "spread prevention target candidate" has not been extracted (NO in Step S503), the process proceeds to Step S504.

In Step S504, the spread prevention processing unit 150 extracts the source of generation of the abnormal state and the device of the spread destination candidate identified in the driving mode influence degree determination (Step S103 of FIG. 10) by the determination unit 130 as a candidate (spread prevention target candidate) for the execution target of the spread prevention process. It should be noted that in the case where there are plural migration destination driving modes extracted in the migration destination driving mode extraction (Step S104 of FIG. 10) by the driving mode candidate extraction unit 140 at this time, the priority of each device of the spread prevention target candidate may be calculated in such a manner that a difference between the driving modes is obtained, "o" is set in the constitutional element 1732 (see FIG. 7), and the priority is set higher to an element (device) configuring a more advanced driving mode.

Next, in Step S505, the spread prevention processing unit 150 refers to the spread prevention determination information 175 stored in the relevant information storing unit 170, and calculates a time (spread prevention processing time) required to execute the spread prevention process for each spread prevention target candidate extracted in Step S504.

Here, the spread prevention determination information 175 to be referred to in Step S505 and S506 will be concretely described with reference to FIG. 13.

FIG. 13 is a diagram for describing a data structure example of the spread prevention determination information. The spread prevention determination information 175 is information to be referred to in calculation of the spread prevention processing time, and is stored in, for example, the relevant information storing unit 170.

According to FIG. 13, the spread prevention determination information 175 has a data structure with a device ID 1751, a device 1752, a spread prevention process prediction time 1753, and a driving mode influence degree 1754. An identifier allocated to identify the devices (information processing devices 10 and 20) is written in the device ID 1751, and the type of each device identified on the basis of the device ID 1751 is written in the device 1752. A prediction time required to execute the spread prevention process for the device is written in the spread prevention process prediction time 1753. An influence degree by the device on the driving mode is written in the driving mode influence degree 1754. For example, a larger value to be written means a higher influence degree.

It should be noted that as the prediction time written in the spread prevention process prediction time 1753, as similar to the migration allowed time 1743 (see FIG. 12) in association with the driving mode, a static time may be preliminarily decided on the basis of a specification required in a design stage, or a time necessary for executing the spread prevention process without influencing on the travelling control may be dynamically calculated and registered on the basis of a vehicle state and a surrounding environment state.

By referring to such spread prevention determination information 175, the spread prevention processing unit 150 calculates the spread prevention processing time of each device extracted as the spread prevention target candidate in Step S505. Specifically, for example, the spread prevention processing unit 150 can calculate the spread prevention process prediction time 1753 corresponding to each device (the device ID 1751 and the device 1752) of the spread prevention target candidate as the spread prevention processing time of the device. In addition to it, for example, a total time of the transmission/reception time of a communication message and the spread prevention process prediction time 1753 may be calculated as the spread prevention processing time of the device.

Next, the process of Step S506 will be described. As shown in FIG. 11, when the spread prevention processing time of the spread prevention target candidate is calculated in Step S505, or when it is determined that the spread prevention target candidate has not been extracted in Step S503, the process of Step S506 is performed.

In Step S506, the spread prevention processing unit 150 extracts a spread preventable target candidate on the basis of the allowed time calculated in Step S501, the spread prevention processing time calculated in Step S505, and the spread prevention determination information 175.

More specifically, in the first place, the spread prevention processing unit 150 compares the allowed time with the spread prevention processing time to determine whether or not the spread prevention process can be executed within the allowed time. Then, if the result of the determination shows that the spread prevention process can be executed, the driving mode influence degrees 1754 associated with the devices 1752 for all the corresponding spread prevention target candidates are acquired from the spread prevention determination information 175, and a device having a high influence degree is extracted as the "spread preventable target candidate".

It should be noted that in the case where the priority of each device of the spread prevention target candidate has been calculated in Step S504, a device having high priority may be preferentially extracted as the "spread preventable target candidate" among all the spread prevention target candidates for which it is determined that the spread prevention process can be executed. In addition, the "spread preventable target candidate" may be extracted in consideration of both of the priority and the influence degree (driving mode influence degree 1754) on the driving mode.

In addition, as an extraction method in Step S506, for example, the device of the source of generation of the abnormal state may be preferentially extracted as the "spread preventable target candidate" other than the above-described example. In such a case, since the spread prevention process is preferentially performed for the source of generation of the abnormal state, it can be expected to suppress damage by the abnormal state from spreading. In addition, for example, the device of the spread destination candidate of the abnormal state may be preferentially extracted as the "spread preventable target candidate". In such a case, it can be expected to suppress secondary spreading of the abnormal state caused by a security attack.

In addition, when the spread prevention process determination is made once in the embodiment, the number of "spread preventable target candidates" that can be extracted in the process of Step S506 is not limited to one. The spread prevention processing unit 150 may collectively extract plural devices satisfying conditions as the "spread preventable target candidates".

Step S507 is performed in the case where it is determined that the certain amount of time or longer does not remain as the allowed time in Step S502. At this time, since the allowed time is less than the minimum time necessary for executing the spread prevention process, the spread prevention processing unit 150 stops processes (for example, Steps S401, S402, and S105 of FIG. 10) related to a series of spread prevention processes.

By performing the processes of Steps S501 to S507 of FIG. 11 as described above, the information processing device 10 determines whether or not the spread prevention process can be executed within the allowed time in which real-time control is not influenced, and can extract one of the spread prevention target candidates (the sources of generation of the abnormal state and the spread destination candidates) for which the spread prevention process can be executed within the allowed time and which has a high influence degree as the "spread preventable target candidate".

### (2-3) Conclusion

As described above, by performing the abnormality handling process according to the processing procedures exemplified in FIG. 10 and FIG. 11, the information processing device 10 according to the second embodiment collects information to determine the abnormal state, and identifies the source of generation of the abnormal state and the spread destination candidate on the basis of the collected information. Further, the information processing device 10 considers spread of the abnormal state, and can switch the driving mode of the vehicle 1 to a safe driving mode that is not influenced by the abnormal state. In addition, the information processing device 10 can execute the spread prevention process for the identified source of generation of the abnormal state and spread destination candidate in consideration of the allowed time so as not to influence on the real-time control in the vehicle 1.

Further, as similar to the effect in the first embodiment, the above-described effect in the second embodiment is effectively exerted in particular when the abnormal state that has occurred is caused by a security attack.

In addition, as similar to the abnormality handling process in the first embodiment, the abnormality handling process performed by the information processing device 10 according to the second embodiment is not limited to the processing procedure exemplified in FIG. 10 or the like, but may be replaced by various derivative processing procedures or various derivative processing procedures may be added.

For example, the spread prevention process may be executed first for the source of generation of the abnormal state after Step S104 of FIG. 10, and then the processes subsequent to Step S401 may be performed. In such a case, since the spread prevention process is executed for the source of generation (the occurrence place or occurrence function) of the abnormal state irrespective of the presence or absence of the allowed time, it is possible to suppress the abnormal state from spreading with the highest priority. Further, the spread prevention process is sequentially executed for the spread destination candidates of the abnormal state in consideration of the allowed time thereafter. Accordingly, even when the abnormal state caused by a security attack has occurred, the abnormal state can be suppressed from spreading without influencing on the real-time control in the vehicle 1, and safe travelling control of the vehicle 1 can be advantageously maintained.

The first and second embodiments of the present invention have been described above. However, some or all of the configurations, functions, processing units, processing means, and the like in each embodiment may be realized using hardware by designing with, for example, integrated circuits, or may be realized using software in such a manner that a processor interprets and executes a program realizing each function. Information of a program, a table, a file, and the like realizing each function can be stored in a storage device such as a memory, a hard disk, or an SSD (Solid State Drive), or a recording medium such as an IC card, an SD card, or a DVD. In addition, the control lines and the information lines considered to be necessary in the explanation are shown, but all the control lines and the information lines in a product are not necessarily shown. In practice, almost all the configurations may be considered to be connected to each other.

### List of Reference Signs

- 1: vehicle
- 2: communication bus
- 10: information processing device
- 11: CPU
- 12: memory
- 13: communication interface
- 14: input/output interface
- 15: communication bus
- 20 (20A, 20B, 20C): information processing device
- 21: vehicle outside information processing device
- 22: OBD2 interface
- 23: diagnostic tool
- 110: communication unit
- 120: information acquisition unit
- 130: determination unit
- 140: driving mode candidate extraction unit
- 150: spread prevention processing unit
- 160: driving mode decision unit
- 170: relevant information storing unit
- 171: abnormality information
- 172: abnormality spread information
- 173: driving mode switching information
- 174: migration allowed time information
- 175: spread prevention determination information

## Claims

1. An information processing device included in an in-vehicle system of a vehicle, the device comprising:
an information acquisition unit that collects abnormality information relevant to an abnormality that has occurred in the vehicle;
a determination unit that identifies a source of generation of the abnormality that has occurred on the basis of the abnormality information; and
a spread prevention processing unit that executes a spread prevention process in which a predetermined function of a target identified by the determination unit is restricted.

2. The information processing device according to claim 1,
wherein the determination unit identifies the source of generation of the abnormality that has occurred and a spread destination candidate to which the abnormality possibly spreads.

3. The information processing device according to claim 1,
wherein for each of a plurality of driving modes included in the vehicle, driving mode switching information showing an constitutional element necessary for each driving mode is stored, and
wherein a driving mode decision unit that extracts a candidate for a driving mode that can be used even when the abnormality has occurred in the target identified by the determination unit on the basis of the driving mode switching information and decides a migration destination of the driving mode on the basis of the extracted candidate is further provided.

4. The information processing device according to claim 3,
wherein in the case where the abnormality has occurred, the driving mode decision unit migrates the current driving mode to a safe specific driving mode, and then extracts a candidate for a driving mode that can be used even when the abnormality has occurred in the target identified by the determination unit on the basis of the driving mode switching information to decide a migration destination of the driving mode again on the basis of the extracted candidate.

5. The information processing device according to claim 1,
wherein the information acquisition unit collects the abnormality information from the information processing device of itself or other information processing devices included in the in-vehicle system.

6. The information processing device according to claim 1,
wherein the information acquisition unit collects the abnormality information from a plurality of information processing devices mounted in the vehicle or an external information processing device connected through a network.

7. The information processing device according to claim 2,
wherein the information acquisition unit collects the abnormality information relevant to an abnormality caused by a security attack that has occurred in the vehicle.

8. The information processing device according to claim 2,
wherein the determination unit identifies the source of generation and the spread destination candidate relevant to the abnormality that has occurred by targeting a device or a function.

9. The information processing device according to claim 2,
wherein the spread prevention processing unit calculates an allowed time in consideration of an influence on real-time control of the vehicle, extracts a target for which the spread prevention process can be executed within the calculated allowed time among those identified by the determination unit, and executes the spread prevention process for the extracted target.

10. The information processing device according to claim 9,
wherein the spread prevention processing unit calculates an allowed time in consideration of an influence on real-time control of the vehicle, extracts a target for which the spread prevention process can be executed within the calculated allowed time and which has a relatively-high influence degree on the driving mode of the vehicle among those identified by the determination unit, and executes the spread prevention process for the extracted target.

11. An abnormality handling method performed by an information processing device included in an in-vehicle system of a vehicle, the method comprising:
an information acquisition step of collecting abnormality information relevant to an abnormality that has occurred in the vehicle;
a determination step of identifying a source of generation of the abnormality that has occurred on the basis of the abnormality information; and
a spread prevention processing step of executing a spread prevention process in which a predetermined function of a target identified in the determination step is restricted.

12. The abnormality handling method according to claim 11,
wherein the source of generation of the abnormality that has occurred and a spread destination candidate to which the abnormality possibly spreads are identified in the determination step.

13. The abnormality handling method according to claim 11,
wherein the information processing device holds driving mode switching information showing an constitutional element necessary for each driving mode for each of a plurality of driving modes included in the vehicle, and
wherein a driving mode decision step of extracting a candidate for a driving mode that can be used even when the abnormality has occurred in the target identified in the determination step on the basis of the driving mode switching information and deciding a migration destination of the driving mode on the basis of the extracted candidate is further provided.

14. The abnormality handling method according to claim 12,
wherein the abnormality information relevant to an abnormality caused by a security attack that has occurred in the vehicle is collected in the information acquisition step.

15. The abnormality handling method according to claim 12,
wherein in the spread prevention processing step, an allowed time in consideration of an influence on real-time control of the vehicle is calculated, a target for which the spread prevention process can be executed within the calculated allowed time is extracted among those identified in the determination step, and the spread prevention process is executed for the extracted target.
